Europäisches Patentamt

European Patent Office

Office européen des brevets

(11) Veröffentlichungsnummer: **0 269 842**
**A1**

(12) # EUROPÄISCHE PATENTANMELDUNG

(21) Anmeldenummer: **87115646.9**

(22) Anmeldetag: **24.10.87**

(51) Int. Cl.4: **F24C 15/32 , A47J 27/16**

(30) Priorität: **21.11.86 DE 3639771**

(43) Veröffentlichungstag der Anmeldung:
**08.06.88 Patentblatt 88/23**

(84) Benannte Vertragsstaaten:
**AT BE CH DE ES FR GB GR IT LI LU NL SE**

(71) Anmelder: **LechMetall Landsberg GmbH**
**Iglinger Strasse 62**
**D-8910 Landsberga. Lech(DE)**

(72) Erfinder: **Hoogeveen, Frank**
**Weichser Strasse 25**
**D-8061 Vierkirchen(DE)**

(74) Vertreter: **Goddar, Heinz J., Dr. et al**
**FORRESTER & BOEHMERT**
**Widenmayerstrasse 4/I**
**D-8000 München 22(DE)**

(54) **Vorrichtung zur Wärmebehandlung von Speisen mit einem Flachwärmetauscher.**

(57) Die Erfindung betrifft eine Vorrichtung (1) zur Wärmebehandlung von Speisen, mit einem Garraum (2), einem dem Garraum zugeordneten Gebläse (11), vorzugsweise einem Radialgebläse, und Elementen (12) zur Erwärmung der durchgesetzten Luft, wobei die Elemente bei einer Verwendung von Heißluft zur Erwärmung der durchgesetzten Luft als Flachwärmetauscher ausgebildet sind.

FIG. 2

EP 0 269 842 A1

## Vorrichtung zur Wärmebehandlung von Speisen mit einem Flachwärmetauscher

Die Erfindung betrifft eine Vorrichtung zur Wärmebehandlung von Speisen, mit einem Garraum, einem dem Garraum zugeordneten Gebläse, vorzugsweise einem Radialgebläse, und Elementen zur Erwärmung der durchgesetzten Luft.

Vorrichtungen der vorbezeichneten Art sind bereits in verschiedenen Ausführungsformen bekannt geworden, wozu beispielsweise auf das DB-GM 84 23 019, die DE-OS 28 42 771, das DB-GM 84 22 834, das DB-GM 81 31 827, das DB-GM 81 28 536, das DBP P 27 31 191 und das DBP 35 18 498 hingewiesen wird. Allen diesen Vorrichtungen ist gemeinsam, daß die im Garraum zirkulierende Luft durch eine elektrische Widerstandsheizung in Form von ein Radialgebläse umgebenden Heizwendeln erwärmt wird. Diese Art der Lufterwärmung hat sich für die in Rede stehende Vorrichtungen auch bewährt, ist jedoch nicht unter allen Voraussetzungen sinnvoll anzuwenden, schon aufgrund der Tatsache, daß notwendigerweise eine geeignete Verfügbarkeit elektrischer Leistung und darüber hinaus entsprechende Anschlüsse vorliegen müssen. Um einen Einsatz derartiger Vorrichtungen auch bei nicht Vorhandensein entsprechender elektrischer Infrastruktur ermöglichen zu können, ist die Anmelderin darauf verfallen, zur Erwärmung der Garraumatmosphäre Heißluft zu verwenden.

Angesichts des eingangs beschriebenen Standes der Technik und dem zuvor erwähnten Entwicklungsstand stellt sich im Hinblick auf die nachstehend gegebene Lehre der Erfindung die Aufgabe, die Elemente zur Erwärmung der durchgesetzten Luft in geeigneter Weise auszubilden.

Diese Aufgabe ist nach der Lehre der Erfindung zunächst und im wesentlichen dadurch gelöst, daß die Elemente bei einer Verwendung von Heißluft zur Erwärmung der durchgesetzten Luft als Flachwärmetauscher ausgebildet sind. Erfindungsgemäß ist erkannt worden, daß eine optimale Erwärmung der Garraumatmosphäre über einen Heißluftwärmeträger auf diese Weise zu erreichen ist. Obwohl relativ große Mengen von Heißluft durchzusetzen sind, wird aufgrund der Flachwärmetauscher nur ein relativ geringer Strömungswiderstand hervorgerufen. Die Erwärmung der Garraumatmosphäre durch einen derartigen Wärmeträger ist somit ohne nennenswerte Änderung der Leistungsdaten des Gebläses erreichbar. Insbesondere bei Verwendung eines Radialgebläses ergibt sich eine sehr intensive Strömung im Bereich der Flachwärmetauscherflächen, die zu guten Wärmeübergangswerten führt. Darüberhinaus ergeben die Flachwärmetauscher eine sich postitiv auswirkende Beeinflussung der Strömung, sodaß auf weitere Luftleitbleche grundsätzlich verzichtet werden kann. Das relativ große innere Volumen der Flachwärmetauscher ermöglicht eine relativ geringe Geschwindigkeit der im Inneren der Flachwärmetauscher strömenden heißen Gase. Bei guter Ausnutzung des Brennstoffes, der zur Erhitzung der Heißluft erforderlich ist, ist gleichzeitig eine relativ geringe strömungsmäßige Behinderung im Heißluftströmungsweg gegeben.

In Ausgestaltung der Erfindung ist vorgesehen, daß das Geblase in einer zentralen Öffnung des Flachwärmetauschers angeordnet ist. Unter Beibehaltung der bei den bekannten Vorrichtungen der gattungsgemäßen Art, vgl. die eingangs erwähnten Druckschriften, prinzipiell gegebenen Strömung, d.h. einer zentralen Ansaugung der aufzuheizenden Garraumatmosphäre und einer seitlichen Abgabe der erhitzten Garraumatmosphäre, aus dem Erhitzungsbereich in den eigentlichen Garraumbereich, wird eine sehr gute Ausnützung der in der Heißluft enthaltenen Wärme zur Erhitzung der Garraumatmosphäre erreicht.

Bevorzugt ist weiter vorgesehen, daß der Flachwärmetauscher von unten nach oben durchströmt wird. Diese Strömung entspricht dem natürlichen Strömungsverhalten von erhitzter Luft, sodaß besondere Ventilations-oder Saugelemente im Strömungsweg der erhitzten Luft grundsätzlich nicht erforderlich sind. Es kann der natürliche Kaminzug zur Durchströmung der Flachwärmetauscher ausgenutzt werden.

Es ist darüberhinaus bevorzugt, daß die Flachwärmetauscher sich, zumindest im wesentlichen, senkrecht zu der Rotationsachse des Lüfters, insbesondere des Radiallüfters, erstrecken. Diese Maßnahme sichert den erwünschten geringen Strömungswiderstand im Strömungsweg der Garraumatmosphäre, erbringt darüberhinaus aber auch einen sehr guten Wärmetausch zwischen der Garraumatmosphäre und der Heißluft.

Besonders erwähnt sei die kombinative Wirkung der Maßnahmen, das Gebläse in einer zentralen Öffnung des Flachwärmetauschers anzuordnen, eine Durchströmung des Flachwärmetauschers hinsichtlich des Heißgases von unten nach oben vorzusehen und die Wärmetauscherflächen sich, zumindest im wesentlichen, senkrecht zu der Rotationsachse des Lüfters erstrecken zu lassen. Unter Beibehaltung der erwünschten Zirkulation der Garraumatmosphäre wird bei relativ niedriger erforderlicher Gebläseleistung ein optimaler Wärmetausch zwischen dem Heißgas und der Garraumatmosphäre erreicht.

In weiterer Ausgestaltung der Erfindung ist vorgesehen, daß ein Flachwärmetauscher in Querrichtung, zumindest in seinem unteren Bereich, leicht gekrümmt ausgebildet ist. Bei Durchströmung der Flachwärmetauscher von unten nach oben weist das Heißgas, beim Eintritt in den Flachwärmetauscher im unteren Bereich, sehr hohe Temperaturen auf, die mit einer entsprechenden Ausdehnung des Flachwärmetauschermaterials, was bevorzugt etwa ein Edelstahlblech ist, verbunden ist. Die gekrümmte Ausgestaltung des Flachwärmetauschers in seinem unteren Bereich vermeidet unkontrollierte Ausbeulungen, Werfungen etc. Grundsätzlich kann die gekrümmte Ausgestaltung auch über die Höhe des Flachwärmetauschers insgesamt vorgesehen sein, bislang vorliegende Erkenntnise lassen jedoch eine derartige gekrümmte Ausgestaltung im unteren Bereich als ausreichend erscheinen.

In Fortbildung der zuvor beschriebenen Maßnahme kann noch vorgesehen sein, daß die Krümmung symmetrisch zu einer Mittelachse ist. Damit lassen sich die Wärmetauscherbleche bzw. Wärmetauscherelemente beliebig einbauen, eine Beachtung notwendiger seitenmäßiger Zuordnungen ist nicht erforderlich.

Soweit vorstehend und auch nachstehend von einem Flachwärmetauscher gesprochen wird, so soll dies keinesfalls eine zahlenmäßige Beschränkung zum Ausdruck bringen. Grundsätzlich ist der erfinderische Erfolg mit einem Flachwärmetauscher bzw. einem Flachwärmetauscherelement erreichbar. Bei einem praktischen Ausführungsbeispiel, wie es auch nachstehend noch im einzelnen erläutert wird, sind etwa vier bis sechs derartiger Flachwärmetauscherelemente nebeneinander angeordnet.

Nachstehend wird die Erfindung noch im einzelnen anhand eines auf der beigefügten Zeichnung dargestellten Ausführungsbeispieles im einzelnen erläutert, wobei auf der beigefügten Zeichnung zeigt:

Fig. 1 eine schematische perspektivische Ansicht einer mit den Merkmalen der Erfindung ausgerüsteten Vorrichtung;

Fig. 2 eine schematische Schnittdarstellung der Vorrichtung gemäß Fig. 1, geschnitten etwa entlang der Linie II-II in Fig. 1;

Fig. 3 eine schematische, teilweise perspektivische und teilweise geschnittene Ansicht eines Radialgebläses mit dieses umgebenden Flachwärmetauscherelementen;

Fig. 4 eine teilweise Darstellung eines einzelnen Flachwärmetauscherelementes, mit Betonung der gekrümmten Ausführung in seinem unteren Bereich.

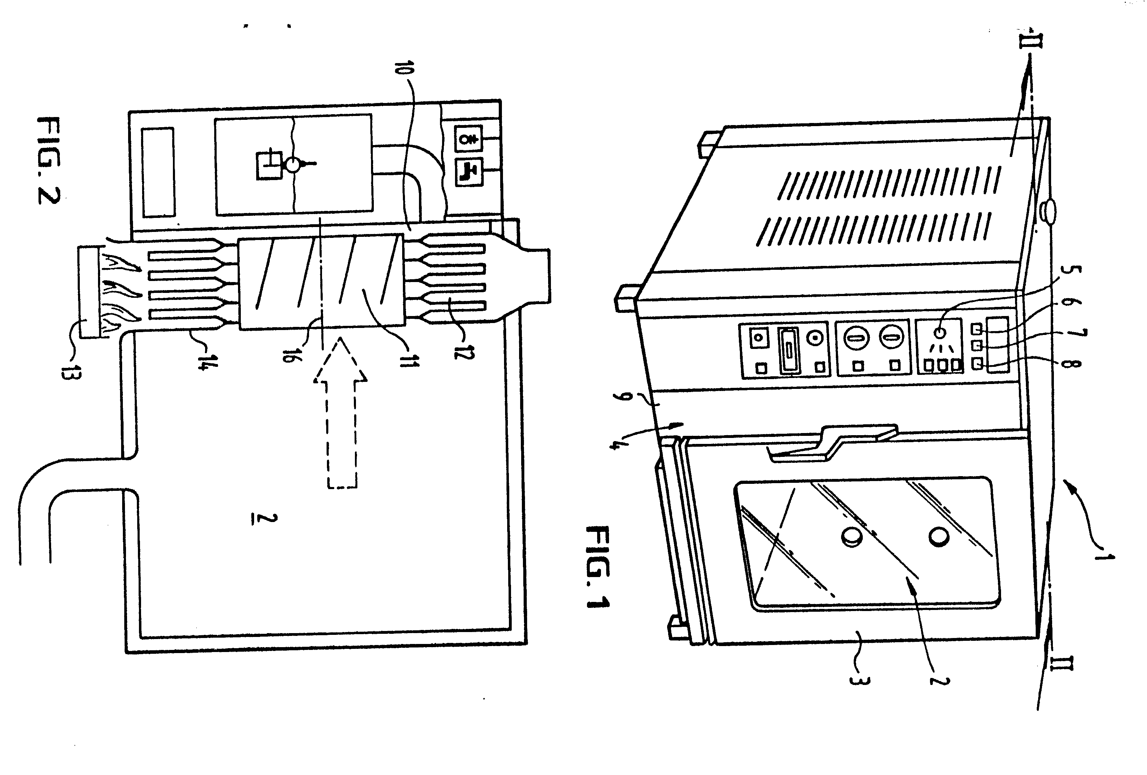

Dargestellt und beschrieben ist eine Vorrichtung 1 zur Wärmebehandlung von Speisen bzw. Gargut allgemein. Wie in Fig. 1 zu erkennen ist, weist die Vorrichtung 1 einen Garraum 2 auf, der mittels einer Garraumtür 3 zugänglich ist. In dem Garraum 2 können Speisen oder sonstiges Gargut auf sogenannten Hordengestellen zur Wärmebehandlung eingebracht werden. Seitlich zu der Garraumtür 3 sind auf der Vorderseite 4 der dargestellten Vorrichtung 1, die auch als Combi-Dämpfer bezeichnet werden kann, mehrere Bedienungsorgane und Anzeigefelder vorgesehen, von denen der Betriebsart-Wahlschalter 5 besonders bezeichnet ist. Hinter den Anzeigefeldern 6,7 und 8 sind Lampen bzw. Leuchtdioden angeordnet, die bei bestimmten Betriebsphasen der Vorrichtung 1 jeweils aufleuchten. Rückwärtig zu den Bedienungsorganen und dem bis zur Garraumtür 3 anschließenden Teil 9 der Vorderseite 4 der Vorrichtung 1 ist ein Betriebsteil der Vorrichtung 1 untergebracht, wie es nachstehend noch im einzelnen, jedenfalls im Hinblick auf die hier interessierenden Merkmale, erläutert wird. Im übrigen darf bezüglich des allgemeinen Verständnisses dieser Vorrichtung auf die Eingangs erwähnten Druckschriften Bezug genommen werden, die in dieser Hinsicht voll inhaltlich in die vorliegende Beschreibung einbezogen werden.

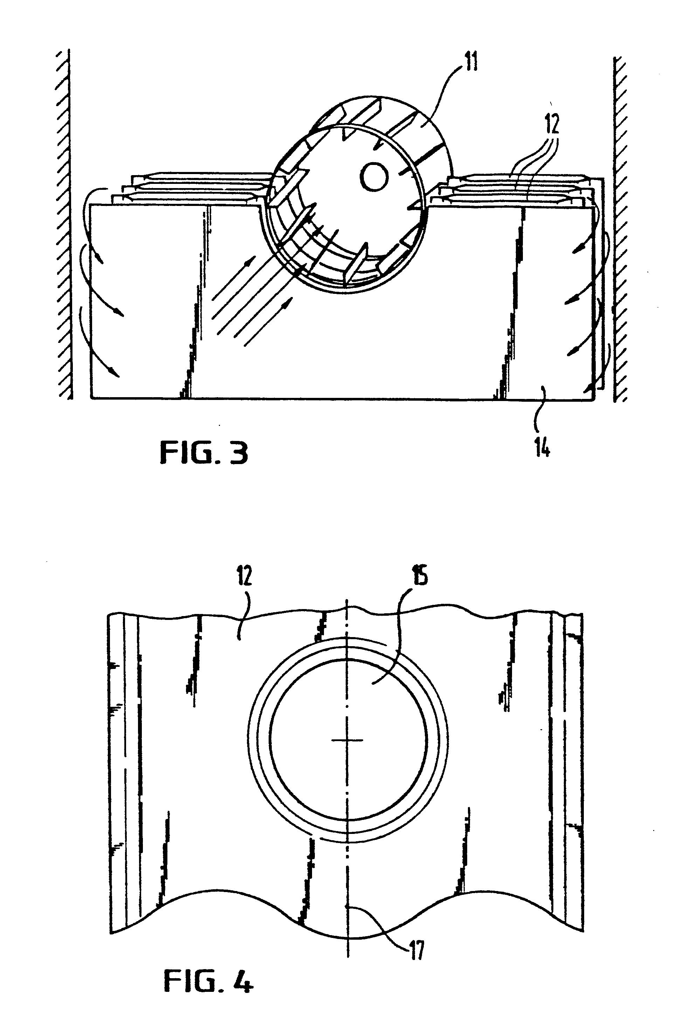

Wie der Schnittdarstellung gemäß Fig. 2 zu entnehmen ist, sind in dem Bereich 10, der auch als Druckkammer bezeichnet werden kann, das Radialgebläse 11 umgebende Flachwärmetauscher 12 vorgesehen, durch welche mittels einer Heizeinrichtung 13, die bei dem dargestellten Ausführungsbeispiel ein Gasbrenner ist, erhitzte Heißluft strömt und im Wärmetausch an die durch das Radialgebläse 11 angesaugte Garraumatmosphäre Wärme überträgt. Wie im Zusammenhang mit Fig. 3 zu erkennen ist, wird die Garraumatmosphäre insbesondere durch seitliche, zwischen dem Abschlußblech 14 und den Garraumwänden vorgesehene Schlitze in den Garraum 2 rezirkuliert. Im übrigen ist bei dem Ausführungsbeispiel gem. Fig. 2 erkennen, daß der Gasbrenner unterhalb des Garraumbodens angeordnet ist, seitlich von außen in den Brennerbereich Luft zur Sauerstoffversorgung der Flamme angesaugt werden kann und das Abschlußblech 14 in einen Flachwärmetauser 12 integriert ist.

Das Radialgebläse 11 ist zentral im Hinblick auf die Flachwärmetauscher 12, bei dem dargestellten Ausführungs beispiel auch im Hinblick auf das Abschlußblech 14, angeordnet, wozu entsprechende zentrale Öffnungen 15 in den Flachwärmetauschern 12 vorgesehen sind, vgl. insbesondere Fig. 4. Es ist auch zu erkennen, insbesondere in Fig. 2, daß das Heißgas die Flachwärmetauscher 12 von unten nach oben durchströmt, wärend durch das Radialgebläse 11 die angesaugte Garraumatmoshäre bezüglich den zentralen Öffnungen 15 die Flachwärmetauscher 12 (außen) radial durchströmt.

Desweiteren ist auch zu erkennen, daß die Flachwärmetauscher 12 sich, zumindest im wesentlichen, senkrecht zu der Rotationsachse 16 des Radialgebläses 11 erstrecken.

In Fig. 4 ist ein einzelner Flachwärmetauscher 12 ge-sondert dargestellt, bei dem die weiterhin im unteren Bereich gegebenenfalls vorgesehene Krümmung, aus Darstellungszwecken in etwas übertriebener Form, er-sichtlich ist. Diese Krümmung ist bevorzugt symmetrisch zu der Symmetrieachse 17 ausgebildet.

Bei dem dargestellten Ausführungsbeispiel ist weiterhin auch bezüglich der, hier nicht im einzelnen beschriebenen, Dampferzeugung, wie sie bei einem Combi-Dämpfer erforderlich ist, eine Erhitzung des Wassers mittels eines Gasbrenners vorgesehen. Beide Gasbrenner sind jedoch getrennt voneinander betreibbar. Dagegen wird der Radiallüfter auch, weiterhin, elektrisch angetrieben, was insbesondere aufgrund der erfindungsgemäßen Flachwärmetauscher möglich ist, da bei relativ geringem Strömungswiderstand keine besonders hohen Leistungen erforderlich sind, also der Radiallüftung mit einem normalen Einphasen-Wechselstrommotor betrieben werden kann.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedensten Ausgestaltungen von Bedeutung sein.

## Ansprüche

1. Vorrichtung zur Wärmebehandlung von Speisen, mit einem Garraum, einem dem Garraum zugeordneten Gebläse, vorzugsweise einem Radialgebläse, und Elementen zur Erwärmung der durchgesetzten Luft, dadurch gekennzeichnet, daß die Elemente bei einer Verwendung von Heißluft zur Erwärmung der durchgesetzten Luft als Flachwärmetauscher (12) ausgebildet sind.

2. Vorrichtung nach Anspruch 1, dadurch gekennzeichnet, daß das Gebläse (11) in einer zentralen Öffnung (15) des Flachwärmetauschers (12) angeordnet ist.

3. Vorrichtung nach einem der Ansprüche 1 oder 2, dadurch gekennzeichnet, daß der Flachwärmetauscher (12) von unten nach oben durchströmt wird.

4. Vorrichtung nach einem der Ansprüche 1 bis 3, dadurch gekennzeichnet, daß die Flachwärmetauscherflächen sich, zumindest im wesentlichen, senkrecht zu der Rotations achse (16) des Lüfters (11) erstrecken.

5. Vorrichtung nach einem der Ansprüche 1 bis 4, dadurch gekennzeichnet, daß ein Flachwärmetauscher (12) in Querrichtung, zumindest in seinem unteren Bereich, leicht gekrümmt ausgebildet ist.

6. Vorrichtung nach Anspruch 5, dadurch gekennzeichnet, daß die Krümmung symmetrisch zu einer Mittelachse bzw. Symmetrieachse (17) ist.

FIG. 1

FIG. 2

**FIG. 3**

**FIG. 4**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| A | PATENT ABSTRACTS OF JAPAN, Band 7, Nr. 9 (M-185)[1154], 14. Januar 1983; & JP - A - 57 166 424 (MATSUSHITA DENKI SANGYO) 13.10.1982 --- | 1 | F 24 C 15/32<br>A 47 J 27/16 |
| A | FR-A-2 472 141 (WALLASVAARA) * Seite 4, Zeile 36 - Seite 5, Zeile 34 * --- | 1 | |
| A | GB-A-1 239 496 (BURGER EISENWERKE) --- | | |
| A | GB-A-1 318 575 (FOSTER REFRIGERATOR CORP.) ----- | | |

|  |
|---|
| **RECHERCHIERTE SACHGEBIETE (Int. Cl.3)** |
| A 23 L 3/00<br>A 47 J 27/00<br>A 47 J 39/00<br>F 24 C 3/00<br>F 24 C 5/00<br>F 24 C 15/00 |

Der vorliegende Recherchenbericht wurde für alle Patentansprüche erstellt

| Recherchenort | Abschlußdatum der Recherche | Prüfer |
|---|---|---|
| BERLIN | 05-02-1988 | PIEPER C |

EPO FORM 1503 03.82 (P0403)